# EUROPÄISCHE PATENTANMELDUNG

(11) **EP 2 436 719 A1**
(43) Veröffentlichungstag der Anmeldung: **04.04.2012**
(21) Anmeldenummer: 10186382.7
(22) Anmeldetag: 04.10.2010
(51) Int. Cl.: C08J 3/00, C08J 3/215, C08J 3/22

(54) **Verfahren zur Herstellung von nanopartikelhaltigen Masterbatches**

(71) Anmelder: Rhein Chemie Rheinau GmbH, 68219 Mannheim (DE)
(72) Erfinder: Schröder, Andreas Dr., 69469 Weinheim (DE); Kohler, Rober, 68794 Oberhausen-Rheinhausen (DE); Briquel, Luc, 68782 Brühl (DE)
(74) Vertreter: Siegers, Britta

(57) **Zusammenfassung**

Die Erfindung betrifft ein neues Verfahren zur Herstellung von nanopartikelhaltigen Masterbatches, vorzugsweise für Elastomere.

## Beschreibung

### Verfahren zur Herstellung von nanovartikelhaltizen Masterbatches

Die Erfindung betrifft ein neues Verfahren zur Herstellung von nanopartikelhaltigen Masterbatches, insbesondere Carbon-Nanotubes- haltige Masterbatches für Elastomere.

Carbon-Nanotubes (CNT) zeichnen sich durch eine hohe Festigkeit und hohe thermische sowie elektrische Leitfähigkeit aus. Es besteht ein hohes Interesse, diese vorgenannten Eigenschaften vom mikro-/nanoskaligen Bereich in makroskopische Komposite, wie z.B. Gummimischung für Reifen oder Dichtungen, zu übertragen.

CNTs werden hergestellt über Chemical Vapour Deposition (CVD)-Verfahren und liegen als Agglomerate vor. Diese Agglomerate erschweren die Dispergierbarkeit.

In Fällen schlechter Dispergierbarkeit von pulverförmigen Rohstoffen, wie zum Beispiel Ruß und Kieselsäure, hat es sich als vorteilhaft erweisen, diese zunächst in hochkonzentrierter Form in einen polymeren Binder, wie z.B. Nauturkautschuk (NR), Styrolbutadienkautschuk (SBR), Ethylenpropylendienkautschuk (EPDM) Nitrilkautschuk (NBR) einzubringen (als Masterbatch) und diesen später in den Kautschuk einzumischen (DE-A-1195941; EP-A 1095961; EP-A 1304347, US-A 6413478).

In den bislang bekannten Verfahren (EP-A 1 995 274 , WO- 2008047022) zur Herstellung von CNT-Masterbatches werden die CNTs über einen Knetprozess in einen polymeren Binder, wie z.B. Nauturkautschuk (NR), Styrolbutadienkautschuk (SBR), Ethylenpropylendienkautschuk (EPDM) oder auch Nitrilkautschuke (NBR), eingebracht. Um homogenere Mischungen herzustellen sind dabei lange Mischzeiten erforderlich. Mit zunehmender Mischzeit, d.h. mit zunehmender Homogenität und Dispersion der Füllstoffe sinkt allerdings nachteiligerweise die elektrische Leitfähigkeit (H. H. Le, et al, Kautschuk Gummi Kunststoffe, 62 (2009) S. 326).

In anderen bislang bekannten Verfahren, z.B. beschrieben in der US-A 20080312364, DE-A 102006055106, WO2009063008, EP 01845124 A1, werden dafür zunächst mechanisch die Aggregate in niedrigviskosere Phase zerstört und dann mit Dispergierhilfsmitteln versetzt. Diese Verfahren haben den Nachteil, dass die daraus erhaltenen Masterbatches einen hohen Anteil an Dispergierhilfsmittel enthalten, der sich oft störend im späteren Endprodukt auswirkt.

Aufgabe der vorliegenden Erfindung war es daher, ein effektives Verfahren zur Herstellung von nanopartikelhaltigen, vorzugsweise Carbon-Nanotubes-haltigen Masterbatches bereitzustellen, nach dem diese so hergestellt werden, dass die positiven Eigenschaften der Nanopartikel, bzw. der CNTs möglichst ohne Qualitätsverlust auf den Masterbatch übertragen werden können und welches zudem kostengünstig ist.

Überraschenderweise wurde nun ein einfaches und kostengünstiges Verfahren zur Herstellung nanopartikelhaltigen, vorzugsweise Carbon-Nanotubes-haltigen Masterbatches gefunden, bei dem die Nanopartikel, vorzugsweise die Carbon-Nanotubes, in einer wäßrigen Suspension in Anwesenheit eines Dispergiermittels und mittels Ultraschallhomogenisator dispergiert, anschließend mit einem Polymer-Latex vermischt und danach koaguliert, gegebenenfalls filtriert und gewaschen, und anschließend getrocknet werden. Bei dem erfindungsgemäßen Verfahren bleiben die positiven Eigenschaften der Nanopartikel/CNTs im so hergestellten Masterbatch unverändert erhalten. Das Dispergierhilfsmittel verbleibt größtenteils im Dispersionsmedium (zu mehr als 65 %) und hat daher kaum noch negative Auswirkungen auf das Elastomer.

Gegenstand der vorliegenden Erfindung ist daher ein Verfahren zur Herstellung von nanopartikelhaltigen, vorzugsweise Carbon-Nanotubes-haltigen Masterbatches, in dem die Nanopartikel, vorzugsweise die Carbon-Nanotubes, in einer wäßrigen Suspension in Anwesenheit mindestens eines Dispergiermittels mittels Ultraschallhomogenisator dispergiert, anschließend mit mindestens einem Polymer-Latex vermischt und danach koaguliert, gegebenenfalls filtriert und gewaschen und anschließend getrocknet werden.

Die Nanopartikel, die im Sinne der Erfindung eingesetzt werden, sind vorzugsweise Feststoffe, die nicht in Wasser löslich sind. Die in dem erfindungsgemäßen Verfahren eingesetzten Nanopartikel weisen vorzugsweise zu 90 % Agglomerate größer als 10 µm und kleiner als 1 mm auf (gemessen mit Laserlichtstreuung in wässriger Suspension).

Bevorzugt ist der Einsatz von Carbon-Nantotubes.

Bei den Carbon-Nantotubes, die im Sinne der Erfindung eingesetzt werden, handelt es sich um alle gängigen CNTs, wie z.B. single-wall, double wall, multi-wall, etc. Diese sind kommerziell verfügbar, z.B. bei der Firma BayerMaterial Science AG oder können nach den, dem Fachmann geläufigen Chemical Vapor Deposition Verfahren oder anderen Verfahren hergestellt werden.

Als Polymere für den Polymer-Latex eignen sich alle über Emulsionspolymerisation herstellbaren Polymere sowie Naturkautschuk (NR). Beispiele hierfür sind (Isoprenkautschuk (IR), Styrol-Butadien-Kautschuk (SBR), carboxylierter Styrol-Butadien-Kautschuk (XSBR), Butadienkautschuk (BR), Isopren-isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA) und/oder Ethylen-Vinylacetat-Kautschuk (EVA) sowie Acrylsäureester-Styrol-Copolymerisate.

Im Fall des Polymer-Latex beträgt der Feststoff-Anteil im Latex > 15%, besonders bevorzugt > 30 %, ganz besonders bevorzugt > 50%, bezogen auf den Latex.

Bei dem Latex-Material handelt es sich vorzugsweise um Wasser. Die Herstellung des Latex erfolgt nach den dem Verfahren bekannten Verfahren durch Emulsionspolymerisation, wie zum Beispiel in dem Lehrbuch "Makromolekulare Chemie" von M.D. Lechner, K. Gehrke, E.H. Nordermeier Birkhäuser Verlag 1993, Seiten 127 bis 129 beschrieben.

Dispergiermittel im Sinne der Erfindung sind oberflächenaktive Substanzen, die die Grenzflächenspannung zwischen der Komponente, die dispergiert werden soll, und dem Dispersionsmedium herabsetzen. Dabei handelt es sich bevorzugt um Seifen, Natriumsalze der Kondensationsprodukte von Alkylnaphthalinsulfonsäuren mit Formaldehyd, Triethanolamin, Amoniumoleat, amoniakalische Lösung von Kasein, Natrium-Kaliumpolyphosphate, Alkylsulfate, Laurylpyridinchlorid, c-Cetyl-Betain, olefinische Coplymere mit anionischem Charakter, Alkylammonium-Salze von polyfunktionellen Polymeren mit anionischem Charakter und hochmolekularen Block-Copolymeren mit anionischem Charakter. Vorzugsweise werden Alkylammonium-Salze von polyfunktionellen Polymeren mit anionischem Charakter eingesetzt.

Darüber hinaus können als erfindungsgemäß geeignete Dispergiermittel grundsätzlich alle dem Fachmann zu diesem Zweck bekannten Netzmittel, Tenside, Dispergiermittel etc. verwendet werden.

In einer weiteren bevorzugten Ausführungsform der Erfindung ist das Dispergiermittel wasserlöslich und verbleibt nach der Koagulation größtenteils im Dispersionsmedium (Wasser), wie z.B. Alkylammonium-Salze von polyfunktionellen Polymeren mit anionischem Charakter, kommerziell erhältlich unter dem Namen Byk® 151 bei der Firma Byk GmbH.

Des Weiteren können zusätzlich zu den Dispergiermitteln auch verfärbende und nicht verfärbende Alterungsschutzmittel, wie z.B. Paraphenylendiamine, Isopropylphenylparaphenylendiamin (IPPD), Para-Phenylen-Diamin (6PPD), N,N-ditoly-p-phenylendiamine (DTPD), etc., Amine, wie z.B. Trimethyl-1,2-dihydrochinolin (TMQ), (Phenyl)amin]-1,4-naphthalendion (PAN), Bis(4-octylphenyl)amin (ODPA), styrolisiertes Diphenylamin (SDPA), etc.), Mono- und Bisphenole, wie z.B . 2,2' -Methylen-bis-(4-methyl-6-tert.butylphenol(BPH), 2,2'-Isobutyliden-bis-(4,6-dimethyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatpbenzimidazole, wie z.B. 2-Mercaptobenzimidazol (MBI), 2-Mercaptomethyl-benzimidazole (MMBI), Zink-4- und -5-methyl-2-mercapto-benzimidazole (ZMMBI), etc., Olefine, paraffinische und/oder aromatische Weichmacher eingesetzt werden. Die Zusammensetzung wird dabei auf das gewünschte Endprodukt abgestimmt.

Weichmacher im Sinne der Erfindung sind z.B. langkettige Ester oder Ether, wie Thioester, Phthalsäureseter, Alkylsulfonsäureester, Adipinsäureester, Sebacinsäuresester, Dibenzylether oder Mineralöle (paraffinische, aromatische, naphthenische oder synthetische Öle).

In dem erfindungsgemäßen Verfahren ist es bevorzugt Ultraschallsonotroden zur Dispergierung der CNT-Agglomerate mit einer Frequenz zwischen 18 und 30 kHz und einer Leistung zwischen 0,1 kW bis 20 kW einzusetzen.

Die Herstellung des CNT-haltigen Suspension erfolgt vorzugsweise wie nachstehend beschrieben:
Zur Herstellung eines CNT-Masterbatches wird vorzugsweise zunächst eine wässrige CNT-Suspension mit einem Dispergiermittel zum Beispiel mit einem Flügelrührer oder mit einem Dissolver der Firma Pendraulik GmbH hergestellt. Die CNT-Agglomerate werden dabei vordispergiert. Die anschließende Dispergierung der CNT-Agglomerate erfolgt dabei mit einem Ultraschallhomogenisator, der z.B. erhältlich ist unter dem Namen UIP 1000hd bei der Firma Hielscher Ultrasonics GmbH. Dieser Ultraschallhomogenisator kann neben der Ultraschallsonotrode BS2d22 auch weitere Aggregate, wie z.B. ein Booster B2-1.8 zur Verstärkung des Energieeintrages enthalten. Zur kontinuierlichen Durchführung der Dispergierung ist der Ultraschallhomogenisator dabei mit einer Durchflusszelle z.B. erhältlich unter dem Namen FC100L1K-1S mit Insert22 bei der Firma Hielscher Ultrasonics GmbH ausgestattet. Die Suspension wird dabei mit einer Geschwindigkeit von wenigstens 200 g/min durch die Durchflusszelle gepumpt. Um höhere Dispersionsgrade zu erreichen kann die Suspension mehrmals durch die Durchflusszelle gepumpt werden oder eine Kaskade von Ultraschallhomogenisatoren verwendet werden.

Die Dispergierung erfolgt dabei vorzugsweise bei möglichst tiefen Temperaturen zwischen 0°C und 100°C bei Atmosphärendruck. Ebenfalls möglich ist die Dispergierung unter Druck, z.B. bis 3 bar Überdruck. In diesen Fällen sind je nach Druck auch Temperaturen oberhalb von 100°C möglich, entsprechend der Siedetemperatur von Wasser beim jeweils vorherrschenden Absolutdruck.

In einer bevorzugten Ausführungsform der vorliegenden Erfindung beträgt der Anteil an Nanopartikel/Carbon-Nanotubes in der Suspension mindestens 5 %, in einer bevorzugten Form 10%, und das Verhältnis von Carbon-Nanotubes zu Dispergiermittels 0,1 : 1 bis 1: 2,5 in einer besonders bevorzugten Form beträgt das Verhältnis von Carbon-Nanotubes zu Dispergiermittels 0,1 : 1 bis 0,5: 1.

In dem erfindungsgemäßen Verfahren erfolgt die Vermischung der wäßrigen CNT-haltigen Suspension mit dem Polymerlatex z.B. wie folgt:
Die Suspension wird in einem Gefäß mit z.B. einem Flügelrührer vorgelegt und der Polymerlatex eingerührt bevor diese zur Koagulation einer Elektrolytlösung oder säurehaltigen Lösung, wie z.B. Ameisensäure, vorzugsweise unter Rühren, zugeführt wird. Bei der Elektrolytlösung handelt es sich vorzugsweise um Sulfat-haltige Lösungen, wie z.B. eine Mg - oder Aluminium - SulfatLösung.

In dem erfindungsgemäßen Verfahren erfolgt die Koagulation dabei vorzugsweise bei Temperaturen zwischen 20 und < 100°C.

Zur Abtrennung des Nanopartikel-haltigen Masterbatches wird das hergestellte Koagulat vorzugsweise durch Filtration abgetrennt.

In einer weiteren Ausführungsform der vorliegenden Erfindung wird das Koagulat anschließend durch Waschen vom Dispergiermittel befreit. Wünschenswert ist eine Anteil von < 25%, bezogen auf die Nanopartikel/ CNTs. Das Waschen erfolgt dabei vorzugsweise unter Verwendung von polaren Lösungsmitteln, wie z.B. Wasser.

Die Trocknung erfolgt vorzugsweise gleichzeitig durch Verdampfen des Restwassers durch einen Knetprozess z.B. in einem Innenmischer oder in einem Extruder unter Anlegen von Vakuum.

Die nachfolgenden Beispiele dienen der Erläuterung der Erfindung, ohne dabei limitierend zu wirken.

### Ausführungsbeispiele:

Dabei wurden die folgenden Einsatzstoffe verwendet:
**CNT** = Baytubes® 150P, ein mehrwandiges Carbon-Nanotubes (CNT) der Firma Bayer MaterialScience AG.
**NBR-Latex** = NBR-Latex mit 18,9% Perbunan 2870 F (Feststoffanteil).
**Perbunan 2870 F= NBR -Kautschuk** mit einem Acrylnitrilanteil von 28% und einer Mooney-Viskosität von ML(1+4) bei 100°C von 70 MU, erhältlich bei Lanxess Deutschland GmbH.
**BYK® 151** = die Lösung eines Alkylammoniumsalzes eines polyfunktionellen Polymeren mit anionischem Charakter, erhältlich bei der Firma BYK GmbH, die Mengenangaben in Tabelle 1 beziehen sich auf den Feststoffanteil.
**Rhenosin® W90B** = Weichmacher, erhältlich bei Rhein Chemie Rheinau GmbH.

### 1) Herstellung von Masterbatches mittels Innenmischer (Vergleichsbeispiel):

Die NBR-Masterbatches mit 10 Gew.-% CNTs sowie 15 Gew.-% CNTs mit dem in Tabelle 1 angegebenen Dispergiermittel wurden in einem ineinandergreifenden 1,51 Kneter der Firma Gumix S.A. (70% Füllgrad, 50 U/min., T > 100°C) hergestellt. Die Mischzeit betrug ca. 20 min. Mit Hilfe eine Doppelwalze wurden 6 mm Felle hergestellt, an denen die Probekörper für die dynamisch-mechanischen und die elektrischen Widerstandsmessungen durchgeführt wurden. Zudem wurden zwei weitere Masterbatche mit 10% CNT hergestellt, indem der Masterbatch mit 15% auf der Doppelwalze mit weiteren NBR, welches Rhenosin® W90B sowie NBR mit Rhenosin® W90B und zusätzlich Byk® 151 enthielt, verschnitten. Die Rezepturen und Ergebnisse sind in Tabelle 1 zusammengefasst.

### 2) Herstellung von 10%-igen CNT-Masterbatches mittels Ultraschallhomogenisator (erfindungsgemäß):

### a) Herstellung einer wässrigen CNT-Dispersion

Zur Herstellung von 10%-igen CNT-Masterbatches wurde zunächst 11 einer 5%-igen wässrigen CNT-Suspension mit 2,5% des Netz- und Dispergieradditives BYK®151 (bezogen auf die nichtflüchtigen Bestandteile des Dispergieradditives) durch Einrühren in destilliertem Wasser hergestellt. Die Dispergierung der CNT-Agglomerate erfolgte mit einem Ultraschallhomogenisator UIP 1000hd der Firma Hielscher Ultrasonics GmbH, ausgerüstet mit einem Booster BS2d22 zur Verstärkung des Energieeintrages bei 80% der maximalen Sonotrodenleistung. Die 5%-ige CNT-Suspension wurde für ca. 3 h durch die mit Leitungswasser gekühlte Durchflusszelle FC100L1K-1S mit Insert 22 des Homogenisators bei einer Pumpgeschwindigkeit von zunächst 400 g/min (zur Vordispergierung) und ab 20 min. bei 200 g/min. im Kreis gepumpt. Die Leistung der Sonotrode betrug zwischen 280 Watt bis 245 Watt. Die Temperatur lag am Anfang des Dispergiervorganges bei Raumtemperatur und am Ende bei ca. 40°C.

Nach unterschiedlichen Zeitpunkten wurden Proben genommen und anschließend mit einer 2%igen BYK151 Lösung verdünnt. Die Partikelgrößenverteilung wurde mit Laserlicht untersucht. Nach ca. 50 min. werden in den nach dem erfindungsgemäßen Verfahren hergestellten Proben keine CNT-Agglomerate > 1 µm mehr gefunden.

### b) Herstellung eines 10%-Masterbtaches

Entsprechend 2a) wurden 2,5 1 einer 5%-igen CNT-Suspension mittels Ultraschallhomogenisator für ca. 3 h homogenisiert. Dabei wurde 90 min. bei 400 g/min. gepumpt 10 min. bei 300 g/min. und 90 Minuten bei 200 g/min. Nach Ende der Dispergierung wurden zwei Ansätze von 283 g dieser Dispersion mit dem NBR-Latex vermischt und nach wenigen Minuten in 1,3 1 eines warmen (65°C bis 45°C) 2%-igen MgSO₄ Salzbades zur Koagulation gebracht. Das Koagulat wurde filtriert und mit Wasser gewaschen. Das Serum war blank und schäumte stark, aufgrund des enthaltenden Dispergierhilfsmittels. Es enthält weder CNTs noch Latexanteile. Nach Trocknung im Luftstrom bei Raumtemperatur für 2 Tage wird eine Ausbeute von 144, 2 g und 144,3 g erhalten. Die maximale Ausbeute liegt bei 150 g inklusive der 7,5 g nicht flüchtige Bestandteile von BYK 151. Die Differenz ist zurückzuführen auf das fehlende (im Serum und Waschwasser) befindliche Dispergiermittel. Der CNT-Masterbatch enthält weniger als die < 50% des eingesetzten Dispergierhilfsmittels.

### c) Homogenisierung und Trocknung des Masterbatches im Innenmischer

Zur Herstellung von 1,2 kg eines 10%-igen CNT-Masterbatches wurde zunächst eine 5%-ige CNT-Suspension entsprechend 2a) hergestellt. Diese Suspension wurde in 8 Ansätzen zu ca. 150 g entsprechend 2b) koaguliert, filtriert und gewaschen. Die 8 Ansätze wurde feucht in den Innenmischer gegeben und mit 4,2% Rhenosin® W90B versetzt. Es wurde für ca. 30min. unter mehrmaligem Anheben des Stempels zum Verdampfen des Wasser geknetet. Dabei stieg die Temperatur auf ca. 150°C.

### 3) Prüfung der nach 1) und 2) hergestellten Masterbatches

Die in 1) und 2c) hergestellten Masterbatches wurden mit dem RPA 2000 der Firma α-Technologies bei 100°C, 0,5 Hz und mit jeweils zwei Strain Sweeps von 0,3 % bis 1000 % dynamischer Dehnungsamplitude untersucht. Zudem wurde der spezifische elektrische Volumenwiderstand von jeweils fünf Messungen an Proben mit ca. 6 bis 9 mm Dicke mit dem Widerstandsmessgerät Milli-TO3 der Firma H.-P. Fischer Elektronik GmbH & Co. untersucht. Dabei wurde die Elektrode FH 10/15 verwendet. Die Ergebnisse sind in Tabelle 1 dargestellt.

**Tabelle 1**

| Rezepturbestandteile | | **Innenmischer** | | | | **Ultraschall** |
|---|---|---|---|---|---|---|
| Baytubes® C 150 P | | 10 | 15 | 10 | 10 | 10 |
| Rhenosin® W 90B | | | | 4 | 4 | 4 |
| Perbunan® 2870 F | | 90 | 85 | 86 | 84 | 84 |
| Byk®151 | | | | | 2 | 2 |
| RPA (2nd Sweep) | | | | | | |
| Modulus G' (1%) | [kPa] | 197 | 425 | 206 | 211 | 417 |
| Modulus G' (10%) | [kPa] | 167 | 297 | 173 | 178 | 309 |
| Modulus G' (100%) | [kPa] | 71 | 102 | 73 | 75 | 107 |
| Modulus G' (1000%) | [kPa] | 10 | 13 | 11 | 11 | 12 |
| tan δ (1%) | | 0,60 | 0,47 | 0,55 | 0,54 | 0,36 |
| tan δ (10%) | | 0,65 | 0,55 | 0,59 | 0,58 | 0,40 |
| tan δ (100%) | | 1,12 | 1,02 | 1,03 | 1,02 | 0,82 |
| tan δ (1000%) | | 2,81 | 2,77 | 2,73 | 2,66 | 2,96 |
| Elektrischer Widerstand | | | | | | |
| Mittelwert | [Ωm] | 2,7E+07 | 1.0E+05 | | | 1,9E+05 |
| St.Abw. | [%] | 15,0 | 22,5 | | | 22,9 |

St.Abw. = Standardabweichung

Es zeigt sich, dass mit dem neuen Verfahren erfindungsgemäß bei vergleichbaren Anteil an CNTs höhere Moduli und gleichzeitig niedrigere Werte für tan δ und niedrigere spezifische elektrische Widerstände wie für Masterbatches mit dem herkömmlichen Verfahren 1) des Innenmischers. Das Dispergiermittels (niedrigere Moduli, höherer tan δ) hat offenbar keinen negativen Einfluss auf die dynamisch-mechanischen Eigenschaften des Masterbatches. Die Masterbatche, hergestellt nach 1) mit 10% CNTs mit und ohne Byk® 151 weisen nur geringe Unterschiede auf. Der 10%ige Masterbatch hergestellt nach dem erfindungsgemäßen Verfahren nach 2a-c) entspricht dem Masterbatch hergestellt nach Verfahren 1) mit 15%. Damit wird gezeigt, dass bei den nach dem erfindungsgemäßen Verfahren hergestellten Masterbatches weniger Nanopartikel benötigt werden, um vergleichbare Werte für die Moduli G' zu erhalten, was die Kosten in der Endanwendung deutlich herabsetzt.

## Patentansprüche

1. Verfahren zur Herstellung von nanopartikelhaltigen Masterbatches, **dadurch gekennzeichnet, dass** die Nanopartikel in einer wäßrigen Suspension in Anwesenheit mindestens eines Dispergiermittels mittels Ultraschallhomogenisator dispergiert, anschließend mit mindestens einem Polymer-Latex vermischt und danach koaguliert, gegebenenfalls filtriert und gewaschen und anschließend getrocknet werden.

2. Verfahren nach Anspruch 1, **dadurch gekennzeichnet, dass** als Nanopartikel Carbon-Nanotubes eingesetzt werden.

3. Verfahren nach Anspruch 1 oder 2, **dadurch gekennzeichnet, dass** der Anteil an Carbon-Nanotubes mindestens 10%, bezogen auf den Masterbatch, erhalten.

4. Verfahren nach einem oder mehreren der Ansprüche 1 bis 3, **dadurch gekennzeichnet, dass** der Anteil an Carbon-Nanotubes in der Suspension mindestens 5 %, und das Verhältnis von Carbon-Nanotubes zu Dispergiermittels 0,1 : 1 bis 1: 2,5 beträgt.

5. Verfahren nach einem oder mehreren der Ansprüche 1 bis 4, **dadurch gekennzeichnet, dass** als Nanopartikel single-wall, multi-wall, double wall Carbon-Nanotubes eingesetzt werden.

6. Verfahren nach einem oder mehreren der Ansprüche 1 bis 5, **dadurch gekennzeichnet, dass** als Dispergiermittel Seifen, Natriumsalze der Kondensationsprodukte von Alkylnaphthalinsulfonsäuren mit Formaldehyd, Triethanolamin, Amoniumoleat, amoniakalische Lösung von Kasein, Natrium-Kaliumpolyphosphate, Alkylsulfate, Laurylpyridinchlorid, c-Cetyl-Betain, olefinische Coplymere mit anionischem Charakter, Alkylammonium-Salze von polyfunktionellen Polymeren mit anionischem Charakter und hochmolekularen Block-Copolymeren mit pigmentaffinen Gruppen eingesetzt werden.

7. Verfahren nach einem oder mehreren der Ansprüche 1 bis 6, **dadurch gekennzeichnet, dass** als Nanopartikel Carbon-Nanotubes mit einer Agglomeratgröße < 1mm eingesetzt werden.
